# EUROPÄISCHE PATENTANMELDUNG

(11) **EP 1 734 359 A1**
(43) Veröffentlichungstag der Anmeldung: **20.12.2006**
(21) Anmeldenummer: 05013178.8
(22) Anmeldetag: 18.06.2005
(51) Int. Cl.: G01N 21/65, G01N 33/497, A61B 5/00, G01N 21/35

(54) **Raman-spektroskopisches Analyseverfahren sowie Vorrichtung dafür**

(71) Anmelder: Roche Diagnostics GmbH, 68305 Mannheim (DE); F. HOFFMANN-LA ROCHE AG, 4070 Basel (CH)
(72) Erfinder: Petrich, Wolfgang Dr., 76669 Bad Schönborn (DE)
(74) Vertreter: Jany, Peter

(57) **Zusammenfassung**

Beschrieben werden ein Raman-Spektrometer und ein Ramanspektroskopisches Analyseverfahren zum Ermitteln des Vorhandenseins und/oder der Konzentration eines Analyten in einer Probe (2), umfassend die folgenden Schritte: Bestrahlen der Probe (2) mit schmalbandigem Primärlicht (3) des nahen infraroten, sichtbaren oder ultravioletten Spektralbereichs, Detektieren von Sekundärlicht (5), das durch Wechselwirkung des Primärlichts (3) mit der Probe (2) entsteht, Aufzeichnen und Auswerten von mindestens einem spektralen Teilbereich des Sekundärlichts, der mindestens eine Raman-Linie enthält, zum Ermitteln des Vorhandenseins und/oder der Konzentration eines Analyten in der Probe (2). Erfindungsgemäß ist vorgesehen, daß die Probe (2) mit Pumplicht (9) zum Anregen von Vibrations- und/oder Rotationszuständen des in der Probe (2) enthaltenen Analyten mit Pumplicht (9) des mittleren oder fernen infraroten Spektralbereichs bestrahlt wird, so daß bei Wechelwirkung des Primärlichts (3) mit der Probe (2) für mindestens einen Vibrations- oder Rotationszustand des in der Probe (2) enthaltenen Analyten eine gegenüber dem thermischen Gleichgewicht erhöhte Besetzungszahl vorliegt.

## Beschreibung

Die Erfindung betrifft ein Raman-spektroskopisches Analyseverfahren zum Ermitteln des Vorhandenseins und/oder der Konzentration eines Analyten in einer Probe, umfassend die folgenden Schritte: Bestrahlen der Probe mit schmalbandigem Primärlicht des nahen infraroten, sichtbaren oder ultravioletten Spektralbereichs, Detektieren von Sekundärlicht, das durch Wechselwirkung des Primärlichts mit der Probe entsteht, Aufzeichnen und Auswerten von mindestens einem spektralen Teilbereich des Sekundärlichts, der mindestens eine Raman-Linie enthält, zum Ermitteln des Vorhandenseins und/oder der Konzentration eines Analyten in der Probe. Die Erfindung betrifft ferner ein Raman-Spektrometer zur Durchführung eines solchen Verfahrens.

Spektroskopische Verfahren haben für klinische Untersuchungen den großen Vorteil, daß im Idealfall auf Reagenzien verzichtet und eine einzige Probe gleichzeitig auf verschiedene Analyten untersucht werden kann. Trotz dieser Vorteile haben sich spektroskopische Untersuchungs-verfahren zur Untersuchung von Proben, die aus menschlichem oder tierischem Gewebe oder Körperflüssigkeiten gewonnen wurden, bislang gegenüber herkömmlichen Untersuchungsverfahren nicht durchsetzen können.

Im klinischen Alltag werden deshalb weiterhin für analytische Untersuchungen Reagenzien benötigt. Dabei werden durch Herstellung und Lagerung der Reagenzien große Kosten verursacht. Ein weiterer Nachteil reagenzgebundener Nachweisverfahren liegt darin, daß eine Probe in der Regel nur auf einen einzigen Analyten untersucht werden kann, was bei Patienten die Entnahme verhältnismäßig großer Probenvolumen erforderlich macht und folglich eine starke Belastung der Patienten mit sich bringt.

Im Stand der Technik sind verschiedene Ansätze zur spektroskopischen Untersuchung von medizinischen Proben bekannt. Zum Nachweis organischer Moleküle ist insbesondere die Spektroskopie molekularer Schwingungen geeignet, da Vibrationszustände in Infrarot- und Raman-Spektren durch charakteristische Linien identifiziert und Analytmolekülen zugeordnet werden können. Eine Zusammenfassung verschiedener Verfahren findet sich in dem Artikel von W. Petrich, "Mid-infrared and Ramanspectroscopy for medical diagnostics", Appl. Spectrosc. Rev. 36 (2001), 181-237.

Raman-spektroskopische Untersuchungen machen sich zunutze, daß Licht des nahen infraroten, sichtbaren oder ultravioletten Spektralbereichs an Molekülen zu einem kleinen Teil inelastisch gestreut wird. Typischerweise macht dieser inelastisch gestreute Teil nur etwa ein Millionstel der einfallenden Lichtintensität aus.

Bei einem inelastischen Streuprozeß wird zwischen streuenden Molekülen und einfallendem Primärlicht Energie ausgetauscht. Das streuende Molekül kann dabei Energie aufnehmen und in einen angeregten Vibrationszustand übergehen oder bei dem Streuprozeß Vibrationsenergie abgeben und in einen tieferen Vibrationszustand (in der Regel in den Grundzustand) übergehen. Bei diesem als Raman-Streuung bezeichneten Prozeß ändert sich die Wellenzahl des gestreuten Sekundarlichts gegenüber dem einfallenden Primärlicht um Werte, die der Differenz der Energie von Vibrationszuständen des streuenden Moleküls entsprechen. Bei organischen Molekülen, beispielsweise Glucose, beträgt der Energieabstand zwischen benachbarten Vibrationszuständen typischerweise etwa 0,12 eV, was bei spektroskopischen Untersuchungen einer Wellenzahl von etwa 1.000 cm⁻¹ entspricht. Ein Beispiel ist die C-O-H-Biegeschwingung des Glukosemoleküls mit einer Wellenzahl von 1077cm⁻¹.

In dem Raman-Spektrum des Sekundärlichts, das durch Wechselwirkung des Primärlichts mit der Probe entsteht, finden sich deshalb neben der Linie des einfallenden Primärlichts sogenannte Raman-Linien, deren Wellenzahlen sich von der Wellenzahl des einfallenden Primärlichts in Abhängigkeit von den Energieabständen benachbarter Vibrationszustände der streuenden Moleküle unterscheiden. In einem Raman-Spektrum werden gegenüber dem Primärlicht rotverschobene Raman-Linien als Stokes-Linien und gegenüber dem Primärlicht blauverschobene Raman-Linien als Anti-Stokes-Linien bezeichnet.

Bei der Untersuchung von Proben, die aus menschlichem oder tierischem Gewebe, Körperflüssigkeiten oder Atemgasen gewonnen wurden, haben die Raman-Linien typischerweise Wellenzahlen, die um etwa 1.000 cm⁻¹ von der Wellenzahl des Primärlichts abweichen, wobei das Verhältnis der Lichtintensität der Raman-Linien viele Größenordnungen unter der Lichtintensität des einfallenden Primärlichts liegt.

Anhand der Abstände und Intensitäten der Raman-Linien von der Linie des einfallenden Primärlichts können Analyten in einer Probe identifiziert werden. Die Intensität der Raman-Linien ist dabei proportional zu der Analytkonzentration, so daß mit Raman-Spektroskopie auch eine Bestimmung von Analytkonzentrationen möglich ist.

Allerdings lassen sich mit bekannten spektroskopischen Untersuchungsverfahren Analytkonzentrationen unterhalb von etwa 0,1 mmol pro Liter nicht nachweisen, wie in D. Rohleder et al., "Comparison of mid-infrared and Raman spectroscopy in the quantitative analysis of serum", J. Biomed. Opt. 10 (Ausg. 3/2005, im Druck) für den Fall von Humanserum beschrieben. Diese begrenzte Nachweisempfindlichkeit ist ein wesentlicher Grund, warum sich spektroskopische Verfahren in der klinischen Labordiagnostik bislang nicht durchsetzen konnten.

Aufgabe der Erfindung ist es deshalb, einen Weg aufzuzeigen, wie die Nachweisempfindlichkeit spektroskopischer Untersuchungen von Proben aus menschlichem oder tierischem Gewebe, Körperflüssigkeiten oder Gasen erhöht werden kann.

Diese Aufgabe wird mit einem Verfahren der eingangs genannten Art erfindungsgemäß dadurch gelöst, daß die Probe zum Anregen von Vibrations- und/oder Rotationszuständen , des in der Probe enthaltenen Analyten mit Pumplicht des mittleren oder fernen infraroten Spektralbereichs bestrahlt wird, so daß bei Wechselwirkung des Primärlichts mit der Probe für mindestens einen Vibrations-und/oder Rotationszustand des in der Probe enthaltenen Anlayten eine gegenüber dem thermischen Gleichgewicht erhöhte Besetzungszahl vorliegt.

Diese Aufgabe wird ferner durch ein Spektrometer gelöst, das eine Pumplichtquelle zum Bestrahlen der Probe mit. Pumplicht des mittleren oder ferner infraroten Spektralbereichs umfaßt.

Durch diese verblüffend einfache Maßnahme läßt sich das Signal-Rausch- bzw. Signal-Untergrund-Verhältnis bei der Auswertung von Anti-Stokes-Linien um mehr als eine Größenordnung steigern, so daß Analyten in Proben, die aus menschlichem oder tierischem Gewebe oder Körperflüssigkeiten gewonnen wurden, mit einer Nachweisempfindlichkeit nachgewiesen werden können, die sich bisher mit spektroskopischen Untersuchungsverfahren nicht einmal annähernd erreichen ließ. Beispielsweise können ohne die Verwendung von Reagenzien Kohlenhydrat-, Lipid- (sowohl high density HD als auch low density LD) und Proteinkonzentrationen ebenso wie Glucose-, Cholesterin- oder Triglyzeridkonzentrationen in medizinischen Proben bestimmt werden.

Das erfindungsgemäße Verfahren ist nicht auf Raman-spektroskopische Untersuchungen beschränkt, so daß anstelle von Raman-Linien auch andere spektrale Eigenschaften des Sekundärlichts, beispielsweise Fluoreszenzlicht, ausgewertet werden können. Wichtig ist jedoch, daß durch die Einstrahlung des Pumplichts Rotations- und/oder Vibrationszustände des in der Probe enthaltenen Analyten angeregt werden. Dies bedeutet, daß die Energieabstände zwischen den Rotations- und/oder Vibrationszuständen, anhand derer der Analyt nachgewiesen werden soll, ausreichend groß sind, so daß der jeweilige Grundzustand eine deutlich höhere Besetzungszahl aufweist als ein darüber liegender erster angeregter Zustand.

Sind nämlich sowohl der Grundzustand als auch der betreffende erste angeregte Rotations- oder Vibrationszustand in gleichem Maße besetzt, so läßt sich durch Einstrahlen von Pumplicht keine Änderung der Besetzung und folglich keine Änderung des Signal-Rausch bzw. Signal-Untergrund-Verhältnisses erreichen.

Ausreichend Energieabstände liegen zwischen Rotations-und Vibrationszuständen vor, die mit Infrarotstrahlung des mittleren oder fernen infraroten Spektralbereichs angeregt werden. Aus diesem Grund wird bei dem erfindungsgemäßen Verfahren Pumplicht des mittleren oder fernen infraroten Spektralbereichs verwendet. Im Rahmen der Anmeldung ist unter dem mittleren infraroten Spektralbereich (MIR) der Spektralbereich von 2 µm bis 25 µm und unter dem fernen infraroten Spektralbereich (FIR) der Spektralbereich von 25 µm bis 1000 µm zu verstehen, wobei sich die Wellenlängenangaben jeweils auf Luft beziehen.

Insbesondere bei Verwendung von Pumplicht des fernen infraroten Spektralbereichs kann die Probe gekühlt werden, so daß sich im thermischen Gleichgewicht größere Unterschiede zwischen den Besetzungszahlen des ersten angeregten Vibrations- oder Rotationszustandes und des dazugehörenden Grundzustands ergeben. Bei Einstrahlen von Pumplicht ergibt sich dann eine gegenüber dem thermischen Gleichgewicht noch deutlicher erhöhte Besetzungszahl des ersten angeregten Zustands.

Das erfindungsgemäße Verfahren ist nicht nur zur Untersuchung von Proben geeignet, die aus menschlichem oder tierischem Gewebe oder Körperflüssigkeiten gewonnen wurden, sondern kann auch zur Untersuchung von sonstigen Proben verwendet werden. Besonders gut geeignet ist das erfindungsgemäße Verfahren insbesondere auch zur Untersuchung von gasförmigen Proben, beispielsweise zur Analyse von Verbrennungsgasen oder dem ausgestoßenen Atem von Menschen oder Tieren. Ein Vorteil des erfindungsgemäßen Verfahrens liegt insbesondere auch darin, daß eine Untersuchung ohne Zerstörung der Probe, insbesondere ohne Zerstörung der Analytmoloküle, möglich ist.

Weitere Einzelheiten und Vorteile der Erfindung werden im folgenden anhand eines Ausführungsbeispiels eines erfindungsgemäßen Raman-Spektrometers unter Bezugnahme auf die beigefügten Figuren erläutert. Die darin dargestellten Besonderheiten können einzeln oder in Kombination verwendet werden, um bevorzugte Ausgestaltungen der Erfindung zu schaffen. Es zeigen:
- Fig. 1: eine prinzipielle Darstellung des Raman-Prozesses anhand eines Termschemas von Vibrationszuständen eines Analytmoleküls bei thermischer Vibrationsanregung.
- Fig. 2: eine Darstellung gemäß Fig. 1 bei erfindungsgemäßer Anregung der Vibrationszustände durch Einstrahlen von Pumplicht des mittleren infraroten Spektralbereichs.
- Fig. 3: eine schematische Darstellung der Intensitäts-verhältnisse von Raman-Linien bei thermischer Anregung der Vibrationszustände und zum Vergleich bei erfindungsgemäßer Anregung durch Einstrahlen von Pumplicht.
- Fig. 4: eine schematische Darstellung eines erfindungsgemäßen Raman-Spektrometers,
- Fig. 5: ein weiteres Ausführungsbeispiel eines erfindungsgemäßen Raman-Spektrometers.

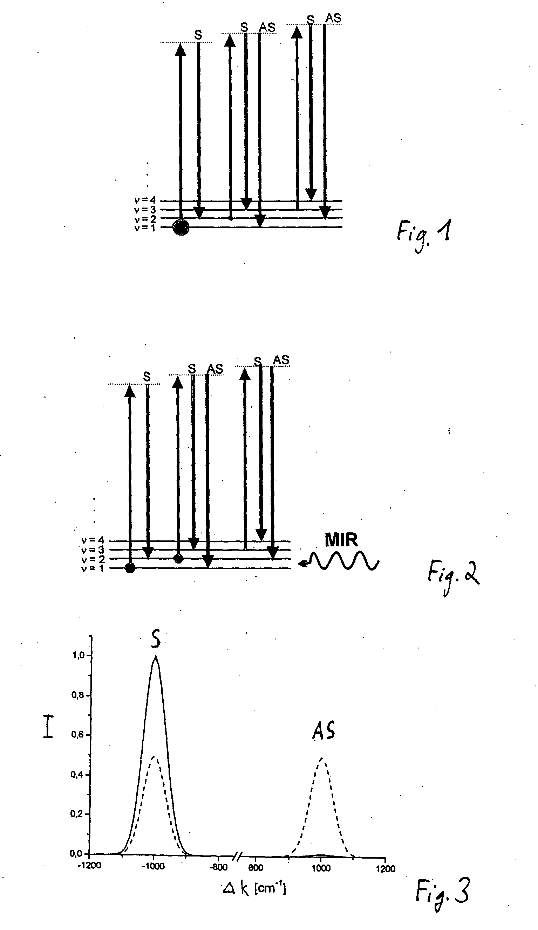

In Figur 1 ist ein stark vereinfachtes Termschema von Vibrationszuständen eines elektronischen Grundzustands eines organischen Moleküls dargestellt. Die einzelnen Vibrationszustände ν sind dabei durch waagrecht Linien dargestellt und mit Zahlen 1 bis 4 bezeichnet. Der Vibrationsgrundzustand ist mit ν = 1 bezeichnet, angeregte Vibrationszustände mit entsprechend höheren Zahlen.

Je größer die Energie eines Vibrationszustands ist, desto weiter oben ist in Fig. 1 die entsprechende Linie dargestellt. Zur Vereinfachung sind in Fig. 1 keine Rotationszustände dargestellt. Rotationszustände können prinzipiell in analoger Weise wie Vibrationszustände zur spektroskopischen Ermittlung des Vorhandenseins und/oder der Konzentration eines Analyten genutzt und durch Einstrahlen von Pumplicht angeregt werden.

Quantenmechanisch läßt sich die Raman-Streuung so verstehen, daß ein einfallendes Photon des Primärlichts von dem streuenden Molekül zunächst absorbiert wird. Dadurch wird das Molekül aus seinem momentanen Vibrationszustand (z.B. ν = 1) in einen virtuellen Zustand angeregt, der in Fig. 1 durch eine punktierte waagrechte Linie dargestellt ist. Der mit der Absorption eines Photons verbundene Anregungsprozeß ist in Fig. 1 durch einen nach oben zeigenden Pfeil dargestellt. Bei elastischer Streuung geht das Molekül aus diesem virtuellen Zustand durch Aussendung eines Photons wieder in seinen ursprünglichen Vibrationszustand über (nicht dargestellt). Bei dem in Fig. 1 durch einen nach unten zeigenden Pfeil dargestellten Fall der Raman-Streuung geht das Molekül nicht in seinen ursprünglichen, sondern einen anderen Vibrationszustand über, so daß sich die Wellenzahl des emittierten Sekundärlichtphotons von der Wellenzahl des absorbierten Primärlichtphotons um die Differenz der Vibrationsenergie der beteiligten Vibrationszustände unterscheidet.

Ganz links in Fig. 1 ist der Fall dargestellt, daß sich das Molekül ursprünglich in seinem Vibrationsgrundzustand (ν = 1) befindet, durch Absorbtion eines Primärlichtphotons in einen virtuellen Zustand gelangt und anschließend in einen angeregten Vibrationszustand (v = 2) übergeht. Bei diesem Prozeß ist die Energie des ausgesandten Sekundärlichtphotons um die Differenz der Vibrationsenergie der beiden Vibrationszuständen ν = 1 und ν = 2 kleiner als die Energie des absorbierten Primärlichtphotons. Das Sekundärlichtphoton ist also gegenüber dem Primärlicht rotverschoben und der dargestellte Streuprozeß gehört zu einer Stokes-Linie, weshalb der betreffende Pfeil mit dem Buchstaben S bezeichnet ist.

Befindet sich das Molekül bei Absorbtion des Primärlichtphotons in einem angeregten Vibrationszustand (z.B. ν = 2 oder ν = 3, siehe Fig. 1 Mitte und rechts), so kann es aus einem virtuellen Zustand durch Emission eines Sekundärlichtphotons entweder in einen energetisch höherliegenden Vibrationszustand (v = 3 bzw. ν = 4) oder einen energetisch tieferliegenden Vibrationszustand (v = 1 bzw. ν = 2) übergehen.

In Fig. 1 sind abwärts gerichtete Pfeile, die kürzer als der dazugehörende aufwärts gerichtete Pfeil sind, mit dem Buchstaben S und abwärtsgerichtete Pfeile, die länger als der dazugehörende aufwärtsgerichtete Pfeil sind, mit AS beschriftet, um kenntlich zu machen, daß die dargestellten Streuprozesse zu einer Stokes-Linie (S) bzw. zu einer Anti-Stokes-Linie (AS) gehören.

Die Intensität der verschiedenen Raman-Linien hängt mit der Anzahl der verfügbaren Moleküle in den jeweiligen Vibrationszuständen zusammen. Bei Raumtemperatur befinden sich die meisten Moleküle in ihrem Vibrationsgrundzustand ν = 1. Nur bei einem kleinen Teil der Moleküle sind Vibrationszustände thermisch angeregt. In Fig. 1 ist die relativ starke Besetzung des Vibrationsgrundzustands ν = 1 durch einen großen Kreis und die deutlich kleinere Besetzung des angeregten Vibrationszustands ν = 2 durch einen wesentlich kleineren Kreis angedeutet. Die wiederum viel schwächere Besetzung des Vibrationszustans ν = 3 ist ohne Kreis dargestellt.

Aus thermodynamischen Gründen wird die Besetzung der Vibrationszustände durch den Boltzmann-Faktor bestimmt. Das Verhältnis zwischen der Intensität einer Anti-Stokes-Linie I_{AS} und der Intensität einer dazugehörenden Stokes-Linie I_{S} ist proportional zu dem Faktor exp (-ΔE_{vib}/kT). Dabei gibt ΔE_{vib} die Energiedifferenz zwischen den beteiligten Vibrationszuständen, k die Boltzmannkonstante und T die Temperatur an. Für typische Werte von ΔE_{vib} = 0,12 eV ergibt sich daraus, daß bei Raumtemperatur die Intensität der Anti-Stokes-Linie nur etwa 0,8 % der Intensität der dazugehörenden Stokes-Linie beträgt. Wegen ihrer wesentlich größeren Intensität werden im Stand der Technik deshalb Stokes-Linien gegenüber Anti-Stokes-Linien zur Untersuchung von Proben bevorzugt.

Raman-spektroskopische Untersuchungen von Proben, die aus menschlichem oder tierischem Gewebe oder Körperflüssigkeiten gewonnen wurden, werden durch das Auftreten von Fluoreszenzlicht erschwert. Biologische Proben zeigen nämlich bei Bestrahlung mit Primärlicht häufig eine starke Fluoreszenz. Im Rahmen der Erfindung wurde erkannt, daß die Auswertung der Anti-Stokes-Linien durch Fluoreszenslicht nur unwesentlich beeinträchtigt wird, da Fluoreszenlicht gegenüber dem eingestrahlten Primärlicht rot verschoben ist. Dennoch resultiert aus der wesentlich schwächeren Intensität von Anti-Stokes-Linien bei thermischer Vibrationsanregung insgesamt ein schlechteres Signal-Rausch-Verhältnis und damit eine schlechtere Nachweisempfindlichkeit als bei einer Auswertung von Stokes-Linien nach dem Stand der Technik.

Bei der Erfindung wurde in diesem Zusammenhang erkannt, daß durch Bestrahlen der Probe mit Pumplicht des mittleren infratoren Spektralbereichs Analytmoleküle aus dem Vibrationsgrundzustand in den ersten angeregten Vibrationszustand gebracht werden können. Die Besetzung der Vibrationszustände wird dann nicht mehr von dem Boltzmann-Faktor, sondern durch die Wechselwirkung der Analytmoleküle mit dem eingestrahlten Pumplicht bestimmt.

Auf diese Weise läßt sich die Intensität der Anti-Stokes-Linien signifikant erhöhen, da diese der Anzahl der Moleküle in angeregten Vibrationszuständen proportional ist. Hat das Pumplicht eine ausreichende Intensität, so kann im Idealfall erreicht werden, daß sich in dem ersten angeregten Vibrationszustand ν = 2 fast ebenso viele Analytmoleküle befinden, wie in dem Vibrationsgrundzustand ν = 1. Durch Methoden des Populationstransfers läßt sich prinzipiell sogar eine Besetzungsinversion und folglich eine noch deutlichere Erhöhung der Intensität von Anti-Stokes-Linien erreichen. Geeignete Methoden des Populationstransfers sind OARP (Optical Adiabatic Rapid Passage)-Verfahren, insbesondere STIRAP (Stimulated Raman Adiabatic Passage)-Verfahren, die beispielsweise in J. Chem. Phys 92 (1990), 5363-5376, beschrieben sind.

In Fig. 2 sind die Verhältnisse bei Anwendung des erfindungsgemäßen Verfahrens schematisch dargestellt. Eingestrahltes Pumplicht des mittleren infraroten Spektralbereichs MIR wird von den Analytmolekülen absorbiert und führt dazu, daß sich die Anzahl der Analytmoleküle in dem Vibrationsgrundzustand ν = 1 gegenüber der in Fig. 1 dargestellten Besetzungsverteilung erniedrigt, während sich die Zahl der Analytmoleküle in dem ersten angeregten Vibrationszustand ν = 2 erhöht. Zur Veranschaulichung ist deshalb in Fig. 2 auf der Linie des Vibrationsgrundzustands ν = 1 ein wesentlich kleinerer Kreis als in Fig. 1 dargestellt. In entsprechender Weise ist der Kreis auf der Linie des ersten angeregten Vibrationszustands ν = 2 entsprechend größer als in Fig. 1 dargestellt.

Um zu verdeutlichen, wie sich die Intensitätsverhältnisse von Stokes- und Anti-Stokes-Linien bei Anwendung des erfindungsgemäßen Verfahrens ändern, sind in Fig. 3 die Intensitäten einer Stokes-Linie S und einer dazugehörenden Anti-Stokes-Linie AS in relativen Einheiten über der Differenz Δk zwischen der Wellenzahl des Primärlichts und der Wellenzahl der jeweiligen Raman-Linie S bzw. AS aufgetragen. Dabei sind die im Stand der Technik beobachteten Linienintensitäten bei thermischer Besetzung der Vibrationszustände gemäß Fig. 1 durchgezogen dargestellt. Gestrichelt dargestellt sind die Intensitätsverhältnisse der Stokes- und Anti-Stokes-Linien bei erfindungsgemäßer Einstrahlung von Pumplicht des mittleren Infrarotbereichs gemäß Fig. 2.

Fig. 3 macht deutlich, daß sich die Intensität der Anti-Stokes-Linie durch das erfindungsgemäße Verfahren drastisch erhöhen läßt. Typischerweise ändert sich bei Einstrahlung von Pumplicht des mittleren infraroten Spektralbereichs der Anteil der Analytmoleküle in dem ersten angeregten Vibrationszustand ν = 2 von etwa 0,8 % auf fast 50 %. Dies bedingt in diesem Beispiel eine Intensitätserhöhung der Anti-Stokes-Linie um einen Faktor 62.

Da Anti-Stokes-Linien nicht durch Fluoreszenzlicht beeinträchtigt werden, ist mit dem erfindungsgemäßen Verfahren eine spektroskopische Untersuchung von Proben, die aus menschlichem oder tierischem Gewebe, Körperflüssigkeiten oder Gasen gewonnen wurden, mit einer Nachweisempfindlichkeit möglich, die sich bisher mit spektroskopischen Untersuchungsverfahren nicht einmal annähernd erreichen ließ.

Die mit dem Einstrahlen von Pumplicht verbundenen Vorteile lassen sich nicht für die "klassische" Raman-Spektroskopie, sondern selbstverständlich auch für spezielle Raman-spektroskopische Verfahren, wie beispielsweise CARS (Coherent Anti-Stokes Raman Spektroscopy) oder SERS (Surface enhanced Raman Spectroscopy) nutzen.

Zur weiteren Erhöhung der Nachweisempfindlichkeit dient bevorzugt das mit Einstrahlen von Pumplicht erhaltene Raman-Spektrum als Vergleichs-Raman-Spektrum, das mit einem Basis-Raman-Spektrum verglichen wird, das an der Probe ohne Einstrahlen von Pumplicht gemessen wird. Auf diese Weise lassen sich Störeinflüsse auf die auszuwertende Anti-Stokes-Linie weitestgehend eliminieren. Störeinflüsse, wie beispielsweise Umgebungslicht, ändern sich nämlich bei Einstrahlen von Pumplicht nicht. Durch eine einfache Subtraktion und/oder Division lassen sich deshalb mit dem Basis-Raman-Spektrum Störeinflüsse auf das Vergleichs-Raman-Spektrum rechnerisch kompensieren. Wird das Pumplicht mehrfach ein- und ausgeschaltet und werden hintereinander mehrere Vergleichs- und Basis-Raman-Spektren gemessen, so lassen sich Störeinflüsse durch Anwendung statistischer Verfahren noch besser kompensieren.

Das Ein- und Ausschalten des Pumplichts stellt eine besondere Form einer Modulation der Intensität des Pumplichts dar. Allgemein gesprochen ist es bevorzugt, die Intensität des Pumplichts zu modulieren, um Raman-Linien anhand von damit verbundenen Änderungen ihrer Intensität besser identifizieren zu können. Besonders bevorzugt wird dabei die Intensität des Pumplichts mit einer Modulationsfrequenz moduliert, die bei der Erfassung des Raman-Spektrums in einem Lock-In-Verfahren verwendet wird, da Lock-In-Verfahren in besonderem Maße zur Elimination von Störeinflüssen geeignet sind.

Ergänzend zu der Detektion von Anti-Stokes-Linien werden bevorzugt auch Stokes-Linien des Raman-Spektrums erfaßt und ausgewertet. Insbesondere läßt sich bei komplexen Spektren mit einer großen Zahl von Linien die Identifikation von Spektrallinien und damit des entsprechenden Analyten erleichtern, indem Anti-Stokes-Linien der dazu gehörenden Stokes-Linie zugeordnet werden.

Bei den meisten organischen Analyten ist zur Anregung von Vibrationszuständen Pumplicht des mittleren infraroten Spektralbereichs am besten geeignet. Insbesondere in Gasen können Moleküle häufig besser anhand von charakteristischen Rotationsbanden identifiziert werden. Zur Anregung der entsprechenden Rotationszustände ist in der Regel Pumplicht des fernen Infrarotbereichs am besten geeignet. Mit Pumplicht im Terahertzbereich (bevorzugt 1 Terahertz bis 100 Terahertz) lassen sich Schwingungszustände mit kleinen Bindungskonstanten, wie sie beispielsweise bei der Verbindung zwischen den Einzelsträngen einer DNA-Helix auftreten, anregen, so daß sich auch derartig komplexe organische Moleküle mit dem erfindungsgemäßen Verfahren quantitativ und qualitativ nachweisen lassen.

Fig. 4 zeigt eine schematische Darstellung eines Raman-Spektrometers zur Durchführung des erfindungsgemäßen Verfahrens. Das dargestellte Raman-Spektrometer umfaßt eine Primärlichtquelle 1 zum Bestrahlen der Probe 2, die sich in einer Küvette 11 befindet, mit schmalbandigem Primärlicht 3 des nahen infraroten, sichtbaren oder ultravioletten Spektralbereichs, einen Detektor 4 zum Detektieren von Sekundärlicht 5, das durch Wechselwirkung des Primärlichts 3 mit der Probe 2 entsteht, und eine Auswerteeinheit 6 zum Auswerten eines gemessenen Raman-Spektrums.

Damit die Raman-Linien eines Raman-Spektrums zuverlässig identifiziert und ausgewertet werden können, muß schmalbandiges Primärlicht 3 verwendet werden. Je breitbandiger das Primärlicht 3 ist, desto größer ist die Linienbreite der Raman-Linien und desto schlechter lassen sich die Raman-Linien von dem Primärlicht 3 trennen, insbesondere wenn eine große Linienbreite zu Überlagerungen führt. Bevorzugt beträgt deshalb die Linienbreite des eingestrahlten Primärlichts 3 höchstens die Hälfte des Abstandes zu dem Zentrum der auszuwertenden Raman-Linie. Für die üblicherweise zu bestimmenden Analyten (beispielsweise Glucose oder Cholesterin) bedeutet dies, daß die Linienbreite des Primärlichts 3 höchstens 500 cm-¹ entsprechen sollte. Unter der Linienbreite einer Linie wird dabei die Differenz der Wellenzahlen verstanden, bei denen die spektrale Lichtintensität die Hälfte eines im Zentrum der Linie erreichten Maximalwerts beträgt.

Bei dem gezeigten Ausführungsbeispiel handelt es sich bei der Primärlichtquelle 1 um einen Laser, mit dem Strahlung einer Wellenlänge zwischen 2500 nm und 10 nm ausgestrahlt werden kann.

Durch Wechselwirkung des Primärlichts 3 mit der Probe 2 entstandenes Sekundärlicht 5 wird mit einer Meßoptik 12 erfaßt und über einen Lichtleiter 13 einem Spektralapparat 7, bevorzugt einem Gitter, zugeführt. Nach einer spektralen Zerlegung wird die spektrale Intensitätsverteilung des Sekundärlichts 5 mit dem Detektor 4, bevorzugt einem CCD-Gerät, gemessen. Der Detektor 4 ist an die Auswerteeinheit 6 angeschlossen, mit der das so gewonnene Raman-Spektrum ausgewertet wird. Das dargestellte Raman-Spektrometer entspricht hinsichtlich Primärlichtquelle 1, Spektralapparat 7 und Detektor 4 dem bekannten Stand der Technik, so daß weitere Erläuterungen hierzu nicht erforderlich sind. Auch andere Raman-Spektrometertypen, insbesondere Fourier-Transform Raman-Spektrometer, lassen sich für das im vorhergehenden beschriebenen Verfahren einsetzen.

Als Besonderheit weist das in Fig. 4 dargestellte Raman-Spektrometer eine Pumplichtquelle 8 zum Aussenden von Pumplicht 9 des mittleren infraroten Spektralbereichs auf. Indem die Probe 2 gleichzeitig mit Primärlicht 3 und Pumplicht 9 bestrahlt wird, werden Vibrationszustände des in der Probe 2 enthaltenen Analyten angeregt, so daß sich die Intensität der auszuwertenden Anti-Stokes-Linien drastisch erhöht.

Das Primärlicht 3 kann wie bei dem gezeigten Ausführungsbeispiel über einen Strahlteiler 14 mit dem Pumplicht 9 zusammengeführt und in einem überlagerten Strahl der Probe 2 zugeführt werden. Das Primärlicht 3 und das Pumplicht 9 können jedoch auch unter einem beliebigen Winkel zueinander auf die Probe 2 gestrahlt werden. Ebenso kann das Sekundärlicht 5 unter einem beliebigen Winkel und insbesondere auch in Rückstreuung gemessen werden.

Als Pumplichtquelle 8 können im einfachsten Fall breitbandige Mittelinfrarotlichtquellen, beispielsweise ein Globar, verwendet werden. Besonders vorteilhaft sind jedoch schmalbandige Pumplichtquellen 8, insbesondere Mittelinfrarotlaser, da auf diese Weise gezielt Vibrationszustände der interessierenden Analytmoleküle angeregt werden können. Auf diese Weise werden ausschließlich Anti-Stokes-Linien der Analytmoleküle verstärkt. Wird eine breitbandige Pumplichtquelle verwendet, so erhöht sich die Intensität der Anti-Stokes-Linien von allen in der Probe enthaltenen Molekülen, was zu einem etwas höheren Untergrund führen kann. Schmalbandige Pumplichtquellen können mit thermischen Mittelinfrarotlichtquellen durch entsprechende Filter oder, was bevorzugt ist, durch Laser verwirklicht werden. Neben Bleisalzlaser sind insbesondere Quantenkaskadenlaser geeignet.

Bevorzugt wird der als Pumplichtquelle 8 verwendete MIR-Laser durchgestimmt, so daß das schmalbandige Pumplicht 9 bei der Raman-spektroskopischen Untersuchung der Probe 2 einen vorgegebenen Frequenzbereich überstreicht. Auf diese Weise werden nacheinander Vibrationszustände verschiedener Moleküle in der Probe angeregt, so daß nacheinander die Anti-Stokes-Linien verschiedener Analytmoleküle mit einer erhöhten Intensität und geringem Untergrund erfaßt werden können. Eine weitere Steigerung des Signal-Rauschverhältnisses läßt sich erreichen, indem unterschiedlich polarisiertes Primärlicht 3 und Pumplicht 9 verwendet werden. In Fig. 4 sind verschiedene Polarisationsrichtungen des Primärlichts 3 und des Pumplichts 9 durch Doppelpfeile 15 angedeutet.

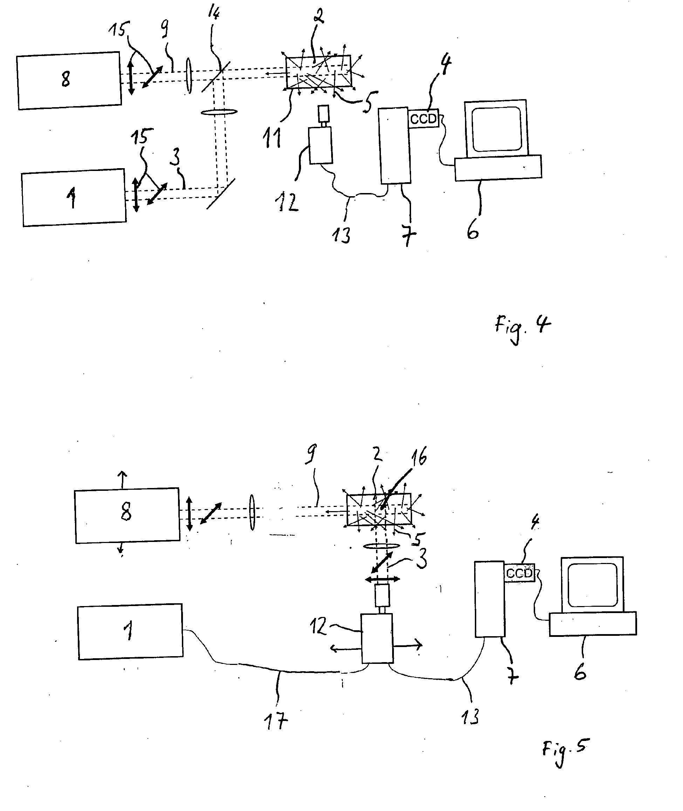

Fig. 5 zeigt ein weiteres Ausführungsbeispiel eines Raman-Spektrometers zur Durchführung des erfindungsgemä-βen Verfahrens. Gleiche und einander entsprechende Teile sind dabei mit übereinstimmenden Bezugszählen gekennzeichnet.

Der wesentliche Unterschied zu dem anhand von Fig. 4 erläuterten Ausführungsbeispiel besteht darin, daß das Primärlicht 3 über einen Lichtleiter 17 einer gegenüber der Probe 2 beweglichen Meßoptik 12 zugeführt wird. Rückgestreutes Sekundärlicht 5 wird von der Meßoptik 12 erfaßt und, wie anhand von Fig. 4 erläutert, über einen Lichtleiter 13 dem Spektralapparat 7 zugeführt.

Auf diese Weise läßt sich mit dem in Fig. 5 dargestellten Aufbau die Probe 2 auch ortsaufgelöst untersuchen. Nur in dem Teilbereich 16 der Probe 2, in dem sich der Primärlichtstrahl 3 und der fokussierte Pumplichtstrahl 9 schneiden, entsteht nämlich Sekundärlicht 5 mit intensitätserhöhten Anti-Stokes-Linien. Durch eine entsprechende Verschiebung der Meßoptik 12 können deshalb schrittweise verschiedene Teilbereiche der Probe 2 ortsaufgelöst untersucht werden. Durch eine entsprechende Beweglichkeit der Pumplichtquelle 8 können nacheinander sämtliche Teilbereiche der Probe 2 untersucht werden.

Die Ortsauflösung läßt sich weiter verbessern, indem auch das Pumplicht 9 jeweils nur auf einen Teilbereich der Probe 2 gerichtet wird. Hierzu ist die Pumplichtquelle 8 entsprechend beweglich.

Von besonderer Bedeutung ist in diesem Zusammenhang, daß die Ortsauflösung des mikrospektroskopischen Verfahrens nur durch die Breite des Primärlichtstrahls 3 begrenzt ist. Da sich der Primärlichtstrahl 3 prinzipiell auf eine Fläche fokussieren läßt, die etwa dem Quadrat seiner Wellenlänge entspricht, ist auf diese Weise eine hervorragende Ortsauflösung möglich. Wie bereits erwähnt, handelt es sich bei dem Pumplicht 3 um Licht des nahen infraroten, sichtbaren oder ultravioletten Spektralbereichs, so daß dessen Wellenlänge kleiner als 2,5 µm, bevorzugt kleiner als 1 µm ist.

Besonders günstig ist es in diesem Zusammenhang, wenn das Pumplicht 9 aufgefächert wird, so daß jeweils ein ebener Teilbereich der Probe 2 von dem Pumplicht 9 durchstrahlt wird. Auf diese Weise lassen sich die für eine Rasterung der Probe erforderlichen Bewegungen der Pumplichtquelle 8 auf ein Minimum reduzieren.

Der anhand von Fig. 5 erläuterte Aufbau läßt sich nicht nur zur Untersuchung von biologischen Proben, beispielsweise Gewebeproben, nutzen, sondern, mit entsprechenden Abwandlungen, beispielsweise auch zur Vermessung von Spurenstoffen in der Luft. Eine eigentliche Probenaufnahme ist für viele Anwendungen nicht nötig. Man kann beispielsweise einen Pumplichtstrahl mit einem Primärlichtstrahl in einem Volumenelement der zu untersuchenden Luft, beispielsweise über einem Schornstein, kreuzen und das Raman-Spektrum von rückgestreutem Sekundärlicht auswerten, beispielsweise um Schadstoffe in Abgasen nachzuweisen. Das erfindungsgemäße Verfahren läßt sich auch als LIDAR-Verfahren (Light Detection and Ranging) nutzen, wobei dem für LIDAR-Verfahren üblichen Aufbau lediglich eine Pumplichtquelle hinzugefügt werden muß.

Mit dem beschriebenen Verfahren läßt sich eine so hohe Genauigkeit erzielen, daß sich beispielsweise in der von einem Menschen ausgestoßenen Atemluft Kohlendioxidmoleküle mit ¹³C Isotopen von Kohlendioxidmolekülen mit gewöhnlichen ¹²C Isotopen unterscheiden lassen. Indem einem Probanden mit ¹³C Isotopen markierte Substanzen (beispielsweise Medikamente, Kohlenhydrate; Proteine etc.) verabreicht werden, kann mit dem erfindungsgemäßen Verfahren untersucht werden, wir schnell die betreffende Substanzen im Körper abgebaut werden.

### Bezugszeichenliste

- 1: Primärlichtquelle
- 2: Probe
- 3: Primärlicht
- 4: Detektor
- 5: Sekundärlicht
- 6: Auswerteeinheit
- 7: Spektralapparat
- 8: Pumplichtquelle
- 9: Pumplicht
- 11: Küvette
- 12: Meßoptik
- 13: Lichtleiter
- 14: Strahlteiler
- 15: Polarisationsrichtungen
- 16: Teilbereich der Probe
- 17: Lichtleiter
- S: Stokes-Linie
- AS: Anti-Stokes-Linie
- MIR: Mittleres Infrarotlicht

## Patentansprüche

1. Raman-spektroskopisches Analyseverfahren zum Ermitteln des Vorhandenseins und/oder der Konzentration eines Analyten in der Probe (2), umfassend die folgenden Schritte:
Bestrahlen der Probe (2) mit schmalbandigem Primärlicht (3) des nahen infraroten, sichtbaren oder ultravioletten Spektralbereichs,
Detektieren von Sekundärlicht (5), das durch Wechselwirkung des Primärlichts (3) mit der Probe (2) entsteht,
Aufzeichnen und Auswerten von mindestens einem spektralen Teilbereich des Sekundärlichts, der mindestens eine Raman-Linie enthält, zum Ermitteln des Vorhandenseins und/oder der Konzentration eines Analyten in der Probe (2),
**dadurch gekennzeichnet, daß**
die Probe (2) zum Anregen von Vibrations- und/oder Rotationszuständen des in der Probe (2) enthaltenen Analyten mit Pumplicht (9) des mittleren oder fernen infraroten Spektralbereichs bestrahlt wird, so daß bei Wechelwirkung des Primärlichts (3) mit der Probe (2) für mindestens einen Vibrations- oder Rotationszustand des in der Probe (2) enthaltenen Analyten eine gegenüber dem thermischen Gleichgewicht erhöhte Besetzungszahl vorliegt.

2. Verfahren nach Anspruch 1, **dadurch gekennzeichnet, daß** der mindestens eine aufgezeichnete und ausgewertete spektrale Teilbereich des Sekundärlichts (5) eine Anti-Stokes-Linie enthält.

3. Verfahren nach Anspruch 1 oder 2, **dadurch gekennzeichnet, daß** die Probe (2) gleichzeitig mit Pumplicht (9) und Primärlicht (3) bestrahlt wird.

4. Verfahren nach einem der vorhergehenden Ansprüche, **dadurch gekennzeichnet; daß** die Intensität des Pumplichts (9) moduliert wird, um mindestens eine Linie in dem Spektrum des Sekundärlichts (15) anhand von damit verbundenen Änderungen ihrer Intensität besser dem Analyten zuzuordnen.

5. Verfahren nach Anspruch 4, **dadurch gekennzeichnet, daß** die Intensität des Pumplichts (9) mit einer Modulationsfrequenz moduliert wird, die bei der Erfassung des Sekundärlicht-Spektrums in einem Lock-In Verfahren verwendet wird.

6. Verfahren nach einem der vorhergehenden Ansprüche, **dadurch gekennzeichnet, daß** das mit Einstrahlen von Pumplicht (9) erhaltene Sekundärlicht-Spektrum als Vergleichsspektrum dient, das mit einem Basis-Sekundärlicht-Spektrum verglichen wird, das an der Probe (2) ohne Einstrahlen von Pumplicht (9) gemessen wird.

7. Verfahren nach Anspruch 6, **dadurch gekennzeichnet, daß** das Pumplicht (9) mehrfach ein- und ausgeschaltet wird und nacheinander mehrere Vergleichs- und Basis-Sekundärlicht-Spektren gemessen werden.

8. Verfahren nach einem der vorhergehenden Ansprüche, **dadurch gekennzeichnet, daß** als Primärlichtquelle (1) ein Laser verwendet wird.

9. Verfahren nach einem der vorhergehenden Ansprüche, **dadurch gekennzeichnet, daß** breitbandiges Pumplicht (9) verwendet wird, das vorzugsweise von einem Globar ausgestrahlt wird.

10. Verfahren nach einem der Ansprüche 1 bis 8, **dadurch gekennzeichnet, daß** schmalbandiges Pumplicht (9) verwendet wird.

11. Verfahren nach Anspruch 10, **dadurch gekennzeichnet, daß** das Pumplicht (9) von einem IR-Laser, vorzugsweise einem MIR- oder FIR-Laser, ausgestrahlt wird.

12. Verfahren nach Anspruch 11, **dadurch gekennzeichnet, daß** der IR-Laser ein Quanten-Kaskadenlaser ist.

13. Verfahren nach Anspruch 10 oder 11, **dadurch gekennzeichnet, daß** die Frequenz des schmalbandigen Pumplichts (9) bei der spektroskopischen Untersuchung der Probe (2) über einen vorgegebenen Frequenzbereich durchgestimmt wird.

14. Verfahren nach einem der vorhergehenden Ansprüche, **dadurch gekennzeichnet, daß** polarisiertes Primärlicht (3) verwendet wird.

15. Verfahren nach einem der vorhergehenden Ansprüche, **dadurch gekennzeichnet, daß** polarisiertes Pumplicht (9) verwendet wird.

16. Verfahren nach einem der vorhergehenden Ansprüche, **dadurch gekennzeichnet, daß** für eine ortsaufgelöste Untersuchung nur ein Teilbereich (16) der Probe (2) sowohl mit Primärlicht (3) als auch mit Pumplicht (9) bestrahlt wird.

17. Verfahren nach Anspruch 16, **dadurch gekennzeichnet, daß** in mehreren Schritten jeweils ein Teilbereich (16) der Probe (2) untersucht wird, indem bei jedem Untersuchungsschritt nur der jeweilige Teilbereich (16) sowohl mit Primärlicht (3) als auch mit Pumplicht (9) bestrahlt wird.

18. Verfahren nach Anspruch 16 oder 17, **dadurch gekennzeichnet, daß** das Primärlicht (3) auf den jeweils zu untersuchenden Teilbereich (16) fokussiert wird.

19. Verfahren nach einem der Ansprüche 16 bis 18, **dadurch gekennzeichnet, daß** das Pumplicht (9) als ein in einer Ebene aufgeweiteter Pumplichtstrahl auf die Probe (2) gestrahlt wird, so daß das Primärlicht (9) auf einen ebenen Teilbereich der Probe (2) wirkt.

20. Verfahren nach einem der vorhergehenden Ansprüche, **dadurch gekennzeichnet, daß** die Probe gasförmig ist, insbesondere von einem Menschen oder Tier ausgestoßenes Atemgas enthält.

21. Anwendung eines Verfahrens nach einem der vorhergehenden Ansprüche zur Untersuchung einer Probe (2), die aus menschlichem oder tierischem Gewebe oder Körperflüssigkeiten gewonnen wurde.

22. Anwendung eines Verfahrens nach einem der Ansprüche 1 bis 20 zum Bestimmen einer Kohlenhydrat-, Lipid- oder Proteinkonzentration.

23. Anwendung eines Verfahrens nach einem der Ansprüche 1 bis 20 zum Bestimmen einer Glucose-, Gesamtcholesterin-, Triglyzeridkonzentration, HD-Lipid- oder LD-Lipidkonzentration.

24. Raman-Spektrometer zur Durchführung eines Verfahrens nach einem der vorhergehenden Ansprüche 1 bis 21 mit einer Primärlichtquelle (1) zum Bestrahlen der Probe (2) mit schmalbandigem Primärlicht (3) des nahen infraroten, sichtbaren oder ultravioletten Spektralbereichs,
einem Detektor (4) zum Detektieren von Sekundärlicht (5), das durch Wechselwirkung des Primärlichts (3) mit der Probe (2) entsteht, und
einer Auswerteeinheit (6) zum Auswerten aufgezeichneter Raman-Linien des Sekundärlichts (5),
**dadurch gekennzeichnet, daß**
das Spektrometer eine Pumplichtquelle (8) zum Bestrahlen der Probe (2) mit' Pumplicht (9) des mitlleren oder fernen infraroten Spektralbereichs umfaßt.
